# EUROPEAN PATENT APPLICATION

(11) **EP 4 683 380 A1**
(43) Date of publication of application: **21.01.2026**
(21) Application number: 23929479.6
(22) Date of filing: 31.03.2023
(51) Int. Cl.: H04W 28/16, H04W 76/12

(54) **METHOD FOR IMPLEMENTING SERVICE, AND COMMUNICATION APPARATUS**

(71) Applicant: Huawei Technologies Co., Ltd., Shenzhen, Guangdong 518129 (CN)
(72) Inventor: YAO, Qi, Shenzhen, Guangdong 518129 (CN); WU, Shaoyun, Shenzhen, Guangdong 518129 (CN); XING, Weijun, Shenzhen, Guangdong 518129 (CN); WU, Jianjun, Shenzhen, Guangdong 518129 (CN)
(74) Representative: Pfenning, Meinig & Partner mbB
(86) International application number: PCT/CN2023/085700
(87) International publication number: WO 2024/197896

(57) **Abstract**

This application provides a service implementation method and a communication apparatus, and is applied to the communication field. The method includes: A service plane control function network element receives a service request including a data plane function requirement and/or a computing plane function requirement, determines, based on the service request, target service plane execution function network elements, a forwarding path between the target service plane execution function network elements, and a processing rule of each target service plane execution function network element, establishes the forwarding path between the target service plane execution function network elements, and sends the processing rule to each target service plane execution function network element. In the method, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement, so that the service having the data plane function requirement and/or the computing plane function requirement can be implemented.

## Description

### TECHNICAL FIELD

This application relates to the field of wireless communication, and in particular, to a service implementation method and a communication apparatus.

### BACKGROUND

A 5th generation (5th generation, 5G) network may be considered as a single connection model, and maintains a user plane transmission path from user equipment (user equipment, UE) to a data network (data network, DN), to enable the UE to access a DN data service.

Currently, a 6th generation (6th generation, 6G) network architecture is still being explored in the industry. Data plane and computing plane functions are to be added to a 6G network, and in this case, the 6G network is not just a connection model. However, currently, there is no related solution for specifically implementing various new services in future 6G based on a data plane and a computing plane.

### SUMMARY

This application provides a service implementation method and a communication apparatus, to implement a service having a data plane function requirement and/or a computing plane function requirement.

According to a first aspect, a service implementation method is provided. The method may be performed by a service plane control function network element, may be performed by a component (for example, a processor, a chip, or a chip system) of the service plane control function network element, or may be implemented by a logical module or software that can implement all or some functions of the service plane control function network element.

The method includes: receiving a service request, where the service request includes a data plane function requirement and/or a computing plane function requirement; and determining, based on the service request, M target service plane execution function network elements, a forwarding path between the M target service plane execution function network elements, and a processing rule of each target service plane execution function network element, where 2≤M; establishing the forwarding path between the M target service plane execution function network elements, and sending the processing rule to the target service plane execution function network element, where the processing rule indicates a service operation to be performed by the target service plane execution function network element.

According to the method provided in this application, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement, so that the service having the data plane function requirement and/or the computing plane function requirement can be implemented.

In a possible implementation, the service plane control function network element may be implemented by a session management function (session management function, SMF).

Specifically, data plane and computing plane control functions may be enhanced in a current SMF, to implement a function of the service plane control function network element. In the solution, an existing network architecture is slightly changed, and the solution is applicable to various requirements of various user planes, data planes, and computing planes in the future.

In a possible implementation, determining the M target service plane execution function network elements based on the service request includes: determining the M target service plane execution function network elements based on the service request and capability information of each of N service plane execution function network elements, where the capability information includes a data plane capability and/or a computing plane capability supported by the service plane execution function network element, the M target service plane execution function network elements belong to the N service plane execution function network elements, and M≤N.

For example, the data plane capability may include one or more of the following capabilities: data feature extraction, data analysis, data compression, or data decompression.

For example, the computing plane capability may include one or more of the following capabilities: a central processing unit (central processing unit, CPU)/graphics processing unit (graphics processing unit, GPU) capacity, a CPU/GPU margin, or supporting a specific computing algorithm.

In a possible implementation, the M target service plane execution function network elements include one or more of the following: at least one access network device, at least one user plane function network element, or at least one network data analytics function network element.

In other words, a function of the service plane execution function network element may be implemented by enhancing data plane and computing plane functions in the access network device, the user plane function network element, or the network data analytics function network element. In the solution the existing network architecture is slightly changed, and the solution is easy to implement.

In a possible implementation, the M target service plane execution function network elements include a first access network device in the at least one access network device. Sending the processing rule to each target service plane execution function network element includes: sending the processing rule to the first access network device through an interface between the service plane control function network element and the first access network device.

Based on the solution, the service plane control function network element and the access network device may directly communicate with each other without forwarding by another network element. The first access network device performs the data plane and/or computing plane functions according to the processing rule.

In a possible implementation, receiving the service request includes: receiving the service request from a first network element; or receiving the service request from the first network element via a network exposure function network element. The first network element is one of the following: a terminal device, an application function network element, a task anchor, or an operation, administration, and maintenance function network element.

In other words, the terminal device, the application function network element, the task anchor, or the operation, administration, and maintenance function network element may send the service request when having a service requirement.

In a possible implementation, determining the M target service plane execution function network elements based on the service request includes: sending a first request to a network repository function network element based on the service request, where the first request includes the data plane function requirement and/or the computing plane function requirement, the first request is used by the network repository function network element to determine P candidate service plane execution function network elements, and the M target service plane execution function network elements belong to the P candidate service plane execution function network elements; receiving a first response from the network repository function network element, where the first response indicates the P candidate service plane execution function network elements; and determining the M target service plane execution function network elements from the P candidate service plane execution function network elements.

In the solution, the service plane execution function network element may register the capability information of the service plane execution function network element with the network repository function network element, and the service plane control function network element may request, based on the data plane function requirement and/or the computing plane function requirement of the service request, the network repository function network element to determine the P candidate service plane execution function network elements, and further determine the M target service plane execution function network elements from the P candidate service plane execution function network elements. It should be understood that P may be equal to M, or may be greater than M.

In a possible implementation, before determining, based on the service request, the M target service plane execution function network elements, the forwarding path between the M target service plane execution function network elements, and the processing rule of each target network element, the method further includes: receiving registration information from some or all of the N service plane execution function network elements, where the registration information includes the capability information of the service plane execution function network element.

In the solution, the service plane execution function network element may register the capability information of the service plane execution function network element with the service plane control function network element.

In a possible implementation, before determining, based on the service request, the M target service plane execution function network elements, the forwarding path between the M target service plane execution function network elements, and the processing rule of each target network element, the method further includes: receiving configuration information, where the configuration information includes capability information of some or all of the N service plane execution function network elements.

In the solution, the capability information of the service plane execution function network element may be registered or configured on the service plane control function network element, to reduce costs caused by querying, by the service plane control function network element, another network element.

According to a second aspect, a communication system is provided. The communication system includes a service plane control function network element and M target service plane execution function network elements. The service plane control function network element is configured to: receive a service request, where the service request includes a data plane function requirement and/or a computing plane function requirement; and determine, based on the service request, M target service plane execution function network elements, a forwarding path between the M target service plane execution function network elements, and a processing rule of each target service plane execution function network element, where 2≤M≤N; establish the forwarding path between the M target service plane execution function network elements, and send the processing rule to the target service plane execution function network element, where the processing rule indicates a service operation to be performed by the target service plane execution function network element. The target service plane execution function network element is configured to receive the processing rule from the service plane control function network element.

According to the communication system provided in this application, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement, so that the service having the data plane function requirement and/or the computing plane function requirement can be implemented.

In a possible implementation, the target service plane execution function network element is further configured to send registration information to a network repository function network element or the service plane control function network element, where the registration information includes a data plane capability and/or a computing plane capability supported by the target service plane execution function network element.

In a possible implementation, the target service plane execution function network element is a network device, and the target service plane execution function network element is specifically configured to receive the processing rule through an interface between the network device and the service plane control function network element.

According to a third aspect, a communication apparatus is provided and includes a module or unit configured to perform the method in any one of the first aspect or the possible implementations of the first aspect.

According to a fourth aspect, a communication apparatus is provided and includes a processor. The processor is coupled to a memory, the memory is configured to store a computer program or instructions, and the processor is configured to execute the computer program or the instructions stored in the memory, to implement the method in any one of the first aspect or the possible implementations of the first aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

In an implementation, the apparatus is a service plane control function network element. For example, the communication interface may be a transceiver or an input/output interface.

In another implementation, the apparatus is a chip in the service plane control function network element. For example, the communication interface may be an input/output interface.

According to a fifth aspect, a processor is provided. The processor includes an input circuit, an output circuit, and a processing circuit. The processing circuit is configured to receive a signal via the input circuit, and transmit the signal via the output circuit, so that the processor performs the method in any one of the first aspect or the possible implementations of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a sixth aspect, a computer program product is provided. The computer program product includes a computer program (which may also be referred to as code or instructions). When the computer program is run, a computer is enabled to perform the method in any one of the first aspect or the possible implementations of the first aspect.

According to a seventh aspect, a computer-readable storage medium is provided. The computer-readable storage medium stores a computer program (which may also be referred to as code or instructions). When the computer program is run on a computer, the computer is enabled to perform the method in any one of the first aspect or the possible implementations of the first aspect.

According to an eighth aspect, a chip is provided, and includes a processor, configured to invoke a computer program from a memory and run the computer program, so that a communication apparatus on which the chip is installed performs the method according to any one of the first aspect or the possible implementations of the first aspect.

According to a ninth aspect, a communication apparatus is provided. The communication apparatus includes an interface and a processor. The interface is configured to send and/or receive a signal, so that the processor performs the method in any one of the first aspect or the possible implementations of the first aspect.

### BRIEF DESCRIPTION OF DRAWINGS

FIG. 1 is a diagram of a 5G network architecture;
FIG. 2 is a diagram of a network architecture according to an embodiment of this application;
FIG. 3 is a schematic flowchart of a service implementation method according to an embodiment of this application;
FIG. 4 is a schematic flowchart of a service implementation method according to an embodiment of this application;
FIG. 5 is a schematic flowchart of a service implementation method according to an embodiment of this application;
FIG. 6 is a schematic flowchart of a service implementation method according to an embodiment of this application;
FIG. 7 is a schematic flowchart of a service implementation method according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions in embodiments of this application with reference to accompanying drawings in embodiments of this application.

In descriptions of this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In this application, descriptions similar to "in a case of...", "if...", "when...", "it is assumed that...", and the like may be used interchangeably. In addition, a network element, a network function, a device, an apparatus, and the like may be replaced with each other. The network element, the network function, the device, the apparatus, and the like may also be replaced with an "entity", and a "functional network element" may also be replaced with a "function".

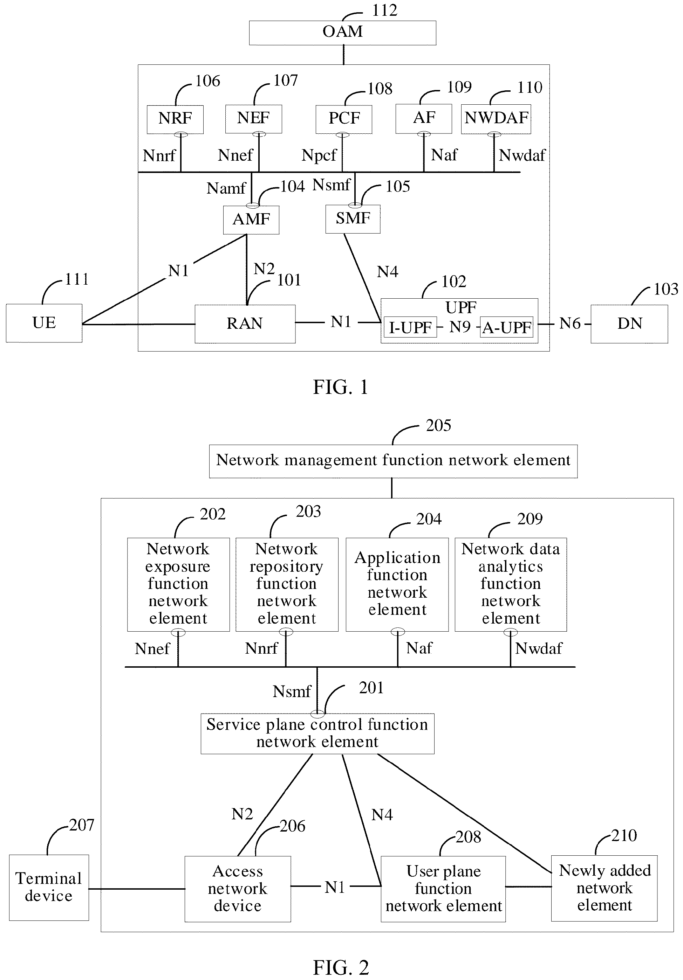

FIG. 1 is a diagram of a 5G network architecture. Refer to FIG. 1. A 5G network includes a user plane and a control plane. The user plane is used for data transmission, and includes a (radio) access network (radio access network, (R)AN) 101 and a user plane function (user plane function, UPF) 102. The UPF may include an intermediate user plane function (intermediate user plane function, I-UPF) and an anchor user plane function (anchor user plane function, A-UPF). The control plane may use a service-based interface (service-based interface). The control plane may include an access and mobility management function (access and mobility management function, AMF) 104, a session management function (session management function, SMF) 105, a network repository function (network repository function, NRF) 106, a network exposure function (network exposure function, NEF) 107, a policy control function (policy control function, PCF) 108, and the like. The 5G network may further include a network data analytics function (network data analytics function, NWDAF) 110. In addition, FIG. 1 further shows UE 111 that accesses the network, and a data network (data network, DN) 103, an application function (application function, AF) 109, and an operation, administration, and maintenance (operation, administration and maintenance, OAM) 112 that are connected to the 5G network. The following describes the network elements, the devices, or the functions shown in FIG. 1.

The (R)AN 101 is configured for providing a network access function for authorized user equipment (user equipment, UE) (for example, the UE 111 in FIG. 1) in a specific area, is responsible for radio resource management, uplink/downlink data classification, quality of service (quality of service, QoS) application, and functions such as completing signaling processing with a control plane network element and completing data forwarding with a user plane function network element.

The UPF 102 is configured for packet routing and forwarding, QoS handling for user plane data, and the like.

The DN 103 is configured to provide a network for data transmission.

In a 5G communication system, after accessing a network, UE may establish a protocol data unit (protocol data unit, PDU) session, access a DN by using the PDU session, and may interact with an AF deployed in the DN. Due to different DNs accessed by a user, the network may select a UPF that accesses the DN as a PDU session anchor (PDU session anchor, PSA) according to a network policy, and access the AF through an N6 interface of the PSA.

The AMF 104 is mainly configured for mobility management, access management, and the like, and may be configured for implementing functions, for example, lawful interception and access authorization/authentication, other than session management in functions of a mobility management network element (mobility management entity, MME).

The SMF 105 is mainly configured for establishing and managing a session for a user, and configuring a data packet forwarding rule, a QoS handling rule, and the like for a user plane function.

The NRF 106 is responsible for registration, state monitoring, and the like on a network function service, to implement automatic management, selection, and scalability of the network function service, and allow each network function to discover a service provided by another network function.

The NEF 107 is configured for providing a customized function of network exposure. The NEF 107 may further expose a capability supported by a 5GC to an external application function network element by using an NEF network element, for example, provide a small-data transfer capability.

The PCF 108 is configured to provide guidance on a unified policy framework for network behavior, provide policy rule information for a control plane function network element (for example, the AMF or SMF network element), and the like.

The AF 109: The application function network element may interact with a 5G system via the application function network element, and is configured for accessing the NEF, interacting with the policy framework for policy control, or the like.

The NWDAF 110 may provide a network analysis service based on request data of a network service. For example, a network service requests dedicated analysis information about a load level of a specific network slice. Alternatively, the network service may subscribe to a specific service, and when a network slice changes or reaches a specific threshold, the NWDAF notifies the network slice.

The OAM 112 is mainly configured for daily work, such as analysis, prediction, planning, and configuration, of a network and a service, and daily operation activities such as testing and fault management of the network and the service of the network.

It should be understood that communication interfaces or service-based interfaces between the network elements, the devices, or the functions shown in FIG. 1 are merely examples. This application does not exclude that communication between the network elements, the devices, or the functions is performed through another interface.

The 5G network shown in FIG. 1 may be considered as a single connection model, and maintains a user plane transmission path (UE-RAN-I-UPF-A-UPF-DN) from the UE to the DN, to enable the UE to access a DN data service.

Currently, a 6G network architecture is still being explored in the industry. A plurality of companies/standard organizations have proposed their own ideas. However, that data plane and computing plane functions are to be added to a 6G network and the network is not just a connection model in this case has become a consensus in the industry. However, currently, there is no related solution for specifically defining a data plane and a computing plane, and implementing various new services in a future 6G based on the data plane and the computing plane.

In view of this, this application provides a service implementation method. A data plane and a computing plane are introduced. Service plane execution function network elements for executing a service, a forwarding path between the service plane execution function network elements for executing the service, and processing rules respectively corresponding to the service plane execution function network elements for executing the service may be determined based on a service request including a data plane function requirement and/or a computing plane function requirement and capability information of service plane execution function network elements, so that the service having the data plane function requirement and/or the computing plane function requirement can be implemented.

The service plane in this application may also be referred to as a function plane, a user plane, a data plane, or a computing plane. A name is not limited in this application. For ease of understanding, the name: service plane, is used for description in this specification.

FIG. 2 is a diagram of a network architecture according to this application. Refer to FIG. 2. The network architecture includes a service plane control function network element 201 and a service plane execution function network element. Optionally, the network architecture may further include one or more of the following: a network exposure function network element 202, a network repository function network element 203, an application function network element 204, or a network management function network element 205. In addition, the network architecture further shows a terminal device 207 that communicates with an access network device 206. The following describes the devices or the network elements.
1. The service plane control function network element 201 has computing plane and data plane control functions, and is configured to manage (or invoke a network repository function 203 for service query) a connection resource, a computing resource, and a data resource, to implement connection, computing, and data collaboration.

In some embodiments, the data plane and computing plane control functions may be enhanced in a session management function network element, to implement functions of the service plane control function network element 201.

In a 5G communication system, the session management function network element may be an SMF. In a future communication system, the session management function network element may be the SMF, or may have another name. This is not limited in this application.

2. The service plane execution function network element is a network element that has or supports specific data plane and/or computing plane functions.

In some embodiments, the service plane execution function network element may be implemented by the access network device 206, a user plane function network element 208, or a network data analytics function network element 209 shown in FIG. 2. Alternatively, the service plane execution function network element may be implemented by adding a network element (for example, a newly added network element 210 shown in FIG. 2) to the existing network architecture.

The access network device may be a base station (Base Station), an evolved NodeB (Evolved NodeB, eNodeB), a transmission reception point (Transmission Reception Point, TRP), a next generation base station (Next Generation NodeB, gNB) in a 5G mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications of a 3rd generation partnership project (3rd Generation Partnership Project, 3GPP). The access network device may be a macro base station, may be a micro base station or an indoor base station, or may be a relay node, a donor node, or the like. A specific technology and a specific device form used by the access network device are not limited in embodiments of this application. The access network device and the terminal device may be located in fixed locations, or may be movable. The access network device and the terminal device may be deployed terrestrially, including an indoor device or an outdoor device, or a handheld device or a vehicle-mounted device; may be deployed on the water; or may be deployed on an airplane, a balloon, and an artificial satellite in the air. Application scenarios of the access network device and the terminal device are not limited in embodiments of this application.

In the 5G communication system, the user plane function network element may be a UPF. In the future communication system, the user plane function network element may still be the UPF, or may have another name. This is not limited in this application.

In the 5G communication system, the network data analytics function network element may be an NWDAF. In the future communication system, the network data analytics function network element may still be the NWDAF, or may have another name. This is not limited in this application.
3. The network exposure function network element 202: In the 5G communication system, the network exposure function network element may be an NEF. In the future communication system, the network exposure function network element may still be the NEF, or may have another name. This is not limited in this application.
4. The Network repository function network element 203: In the 5G communication system, the network repository function network element may be an NRF. In the future communication system, the network repository function network element may still be the NRF, or may have another name. This is not limited in this application.
5. The application function network element 204: In the 5G communication system, the application function network element may be an AF. In the future communication system, the application function network element may still be the AF, or may have another name. This is not limited in this application.
6. The network management function network element 205: In the 5G communication system, the network management function network element may be an OAM. In the future communication system, the network management function network element may still be the OAM, or may have another name. This is not limited in this application.
7. The terminal device 207: The terminal device may be user equipment (UE), a station (station), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a large screen, a vehicle-mounted device, a wearable device, a terminal device in a 5G network, a terminal device in a future evolved public land mobile communication network (public land mobile network, PLMN), or the like. This is not limited in embodiments of this application.

In some embodiments, a signal may be directly exchanged between the service plane control function network element 201 and the access network device 206 without being forwarded by another network element (for example, an AMF).

In some embodiments, a signal may be exchanged between the service plane control function network element 201 and the service plane execution function network element based on a service-based interface, an N4 interface, or another interface.

In some embodiments, a signal may be directly exchanged between the user plane function network element 208 and the network data analytics function network element 209 without being forwarded by another network element (for example, an AMF). For example, a signal may be exchanged between the user plane function network element 208 and the network data analytics function network element 209 based on an N9 interface, a service-based interface, or another interface.

It should be understood that communication interfaces or service-based interfaces between the network elements, the devices, or the functions shown in FIG. 2 are merely examples. This application does not exclude that communication between the network elements, the devices, or the functions is performed through another interface.

It may be understood that, in this application, the network elements, the network elements, or functions may be network components in a hardware device, software functions running on dedicated hardware, or virtualized functions instantiated on a platform (for example, a cloud platform).

The following describes in detail the method provided in this application with reference to the accompanying drawings. It may be understood that, in some accompanying drawings provided in this application, an example in which a network element or a device is used as an execution entity is mainly used to describe the method. However, the execution entity is not limited in this application. For example, the network element or the device in the accompanying drawings may alternatively be a chip, a chip system, or a processor that supports the network element or the device in implementing the method, or may be a logical module or software that can implement all or some functions of the network element or the device.

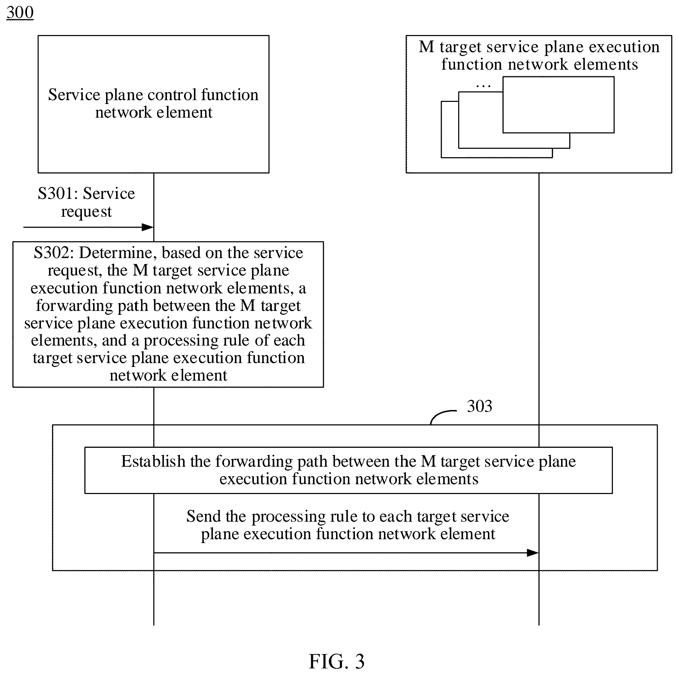

FIG. 3 is a schematic flowchart of a service implementation method according to this application. The method 300 may include S301 to S303. The following describes the steps.

S301: A service plane control function network element receives a service request.

The service request is directly or indirectly from a first network element. To be specific, the first network element may directly send the service request to the service plane control function network element; or the first network element may first send the service request to an intermediate network element, and then the intermediate network element sends the service request to the service plane control function network element. For example, the first network element may be a terminal device, an application function network element, a task anchor, or an operation, administration, and maintenance function network element. For example, the intermediate network element may be a network exposure function network element.

The service request includes a data plane function requirement and/or a computing plane function requirement. In a possible scenario, the service request includes a data plane function requirement. For example, the service request is a request for performing collection (for example, summarization and deduplication), anonymization, and/or compression on specific data. In another possible scenario, the service request includes a computing plane function requirement. For example, the service request is a request for performing local offloading on a specific service, or extracting a specific service flow.

It should be noted that some services may belong to a data plane, or may belong to a computing plane, or some services may belong to both the data plane and the user plane, for example, preprocessing a video data stream.

In addition, it should be understood that different computing plane requirements may have different computing plane capability requirements on the service plane execution function network element. Similarly, different data plane requirements may have different data plane capability requirements on the service plane execution function network element.

S302: The service plane control function network element determines, based on the service request, M target service plane execution function network elements, a forwarding path between the M target service plane execution function network elements, and a processing rule of each target service plane execution function network element.

In some embodiments, the M target service plane execution function network elements may be determined based on the service request and capability information of each of N service plane execution function network elements. The M target service plane execution function network elements belong to the N service plane execution function network elements. In other words, the M target service plane execution function network elements are M service plane execution function network elements in the N service plane execution function network elements, where 2≤M≤N.

Capability information of any service plane execution function network element includes a data plane capability and/or a computing plane capability supported by the service plane execution function network element.

For example, the data plane capability may include one or more of the following capabilities: data feature extraction, data analysis, data compression, or data decompression.

For example, the computing plane capability may include one or more of the following capabilities: a CPU/GPU capacity, a CPU/GPU margin, or supporting a specific computing algorithm.

It should be understood that this application does not exclude that the data plane capability and/or the computing plane capability further include another capability that is not listed herein, and does not exclude a possibility that the data plane capability and/or the computing plane capability are/is not the capability/capabilities listed herein.

In a first implementation, the capability information of the service plane execution function network element may be registered by the service plane execution function network element with the service plane control function network element.

Specifically, the service plane execution function network element may send registration information to the service plane control function network element. The registration information may include the capability information of the service plane execution function network element. To be specific, the service plane execution function network element may register the capability information of the service plane execution function network element with the service plane control function network element by using the registration information. The manner is applicable to a simple networking scenario or a local networking scenario.

In a second implementation, the capability information of the service plane execution function network element may be registered by the service plane execution function network element with a network repository function network element, for example, an NRF.

Specifically, the service plane execution function network element may send registration information to the network repository function network element. The registration information may include the capability information of the service plane execution function network element. To be specific, the service plane execution function network element may register the capability information of the service plane execution function network element with the network repository function network element by using the registration information. The manner is applicable to a complex networking scenario or a distributed networking scenario.

For example, when the capability information of any service plane execution function network element is registered with the network repository function network element, after receiving the service request sent by the first network element, the service plane execution function network element may send, to the network repository function network element, the data plane function requirement and/or the computing plane function requirement included in the service request. The network repository function network element may determine P (M≤P≤N) candidate service plane execution function network elements based on the data plane function requirement and/or the computing plane function requirement and the capability information of the service plane execution function network element registered with the network repository function network element, and return information about the P candidate service plane execution function network elements (for example, identifiers of the P candidate service plane execution function network elements) to the service plane execution function network element. The service plane execution function network element may determine, based on the P candidate service plane execution function network elements, the M target service plane execution function network elements, the forwarding path between the M target service plane execution function network elements, and the processing rule of each target service plane execution function network element. The M target service plane execution function network elements are M candidate service plane execution function network elements in the P candidate service plane execution function network elements.

In a third implementation, the capability information of the service plane execution function network element may be configured on the service plane control function network element. For example, the capability information of the service plane execution function network element may be configured on the service plane control function network element by a management system/an operation and maintenance system.

In other words, the service plane execution function network element does not need to register the capability information, and the capability information of the service plane execution function network element is directly configured on the service plane control function network element.

It should be noted that, in some embodiments, all service plane execution function network elements register capability information by using the first implementation or the second implementation. Alternatively, capability information of all the service plane execution function network elements is implemented by using the third implementation. In some other embodiments, manners of registering or configuring capability information of different service plane execution function network elements may be different. For example, some service plane control function network elements register the capability information by using the first implementation, and some other service plane control function network elements register the capability information by using the second implementation.

In addition, data plane capabilities and/or computing plane capabilities supported by the service plane execution function network elements may be different or may be the same. This is not limited in this application. For example, in a scenario, an access network device #1 supports data feature extraction, an access network device #2 supports data compression and data decompression, and a user plane function network element #1 supports all of data feature extraction, data compression, and data decompression.

In some embodiments, considering that the service plane control function network element may have a specific service range, the service plane control function network element may register, with the network repository function network element, the service range of the service plane control function network element and/or a data plane capability and/or a computing plane capability supported by the service plane control function network element. For example, the data plane capability and/or the computing plane capability supported by the service plane control function network element may be identified by using a data plane capability and/or a computing plane capability supported by a service plane execution function network element managed by the service plane control function network element.

In this embodiment, if the first network element sends the service request via the intermediate network element, the intermediate network element may request the network repository function network element to select, based on the service range of the service plane control function network element and/or the data plane capability and/or computing plane capability supported by the service plane control function network element, a service plane control function network element that meets a requirement, and then send the service request to the selected service plane control function network element.

The processing rule indicates a service operation to be performed by the target service plane execution function network element. To be specific, a processing rule of a specific target service plane execution function network element means that the target service plane execution function network element needs to perform a specific operation, for example, data processing/data analysis, data compression/decompression, preprocessing/fusion processing, or federated (distributed) processing.

For example, in a first possible scenario, the service request is to collect, anonymize, and compress specific data. The service plane control function network element may determine that the access network device #1 and the access network device #2 perform compression, the user plane function network element #1 performs collection, and a network data analytics function network element performs anonymization. The service plane control function network element determines to establish a connection between the access network device #1 and the user plane function network element #1, a connection between the access network device #2 and the user plane function network element #1, and a connection between the user plane function network element #1 and the network data analytics function network element. A processing rule of the access network device #1 is compression, and a processing rule of the access network device #2 is also compression. A processing rule of the user plane function network element #1 is collection and transmission to the network data analytics function network element. A processing rule of the network data analytics function network element is anonymization.

For example, in a second possible scenario, the service request is to first perform local offloading on a specific service flow, extract a key feature, and then perform upload to a data center. The service plane control function network element may determine that a user plane function network element #2 performs data offloading and extracts a key feature, and then a network data analytics function network element performs further analysis. The service plane control function network element determines to establish a connection between the user plane function network element #2 and the network data analytics function network element. A processing rule of the user plane function network element #2 is data offloading and transmission to the network data analytics function network element, and a processing rule of the network data analytics function network element is further processing and analyzing received data.

S303: The service plane control function network element establishes the forwarding path between the M target service plane execution function network elements, and sends the processing rule to each target service plane execution function network element.

For example, in the first possible scenario, the service plane control function network element establishes the connection between the access network device #1 and the user plane function network element #1, the connection between the access network device #2 and the user plane function network element #1, and the connection between the user plane function network element #1 and the network data analytics function network element. In addition, the service plane control function network element separately sends, to the access network device #1, the access network device #2, the user plane function network element #1, and the network data analytics function network element, the processing rules respectively corresponding to the access network device #1, the access network device #2, the user plane function network element #1, and the network data analytics function network element.

According to the method provided in this application, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement, so that the service having the data plane function requirement and/or the computing plane function requirement can be implemented.

In some embodiments, data plane and computing plane control functions may be enhanced in an SMF, to implement functions of the service plane control function network element. In the solution, an existing network architecture (including a user plane function and a session management function) is slightly changed, and the solution is applicable to various requirements of various user planes, data planes, and computing planes in the future.

In some embodiments, data plane and computing plane functions may be enhanced in a RAN, a UPF, or an NWDAF, to implement functions of the service plane execution function network element. In the solution, the existing network architecture is slightly changed, and the solution is easy to implement.

The following describes several specific examples of the method provided in this application by using an example in which the method provided in this application is implemented by enhancing data plane and computing plane functions in a 5G architecture. An SMF, a RAN, UE, a UPF, an AF, an NRF, an NEF and an NWDAF in the following descriptions successively correspond to the service plane control function network element, the access network device, the terminal device, the user plane function network element, the application function network element, the network repository function network element, the network exposure function network element, and the network data analytics function network element in the method 300.

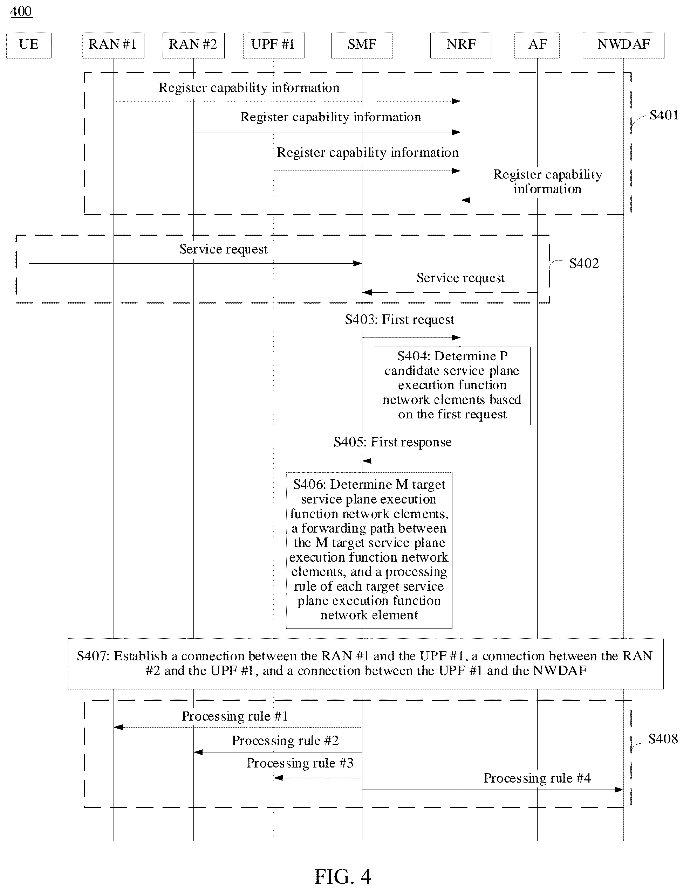

FIG. 4 is a schematic flowchart of a service implementation method according to this application. In the method 400, the SMF may directly receive a service request. In addition, service plane execution function network elements register capability information of the service plane execution function network elements with the NRF. The method 400 may include S401 to S408. The following describes the steps.

S401: The service plane execution function network elements register the capability information of the service plane execution function network elements with the NRF.

For example, a plurality of network elements such as a RAN #1, a RAN #2, a UPF #1, and the NWDAF register capability information of the plurality of network elements with the NRF.

S402: A first network element sends the service request to the SMF. Correspondingly, the SMF receives the service request.

For example, when having a data plane function requirement and/or a computing plane function requirement, the UE or the AF sends the service request to the SMF. The service request may include the data plane function requirement and/or the computing plane function requirement.

S403: The SMF sends a first request to the NRF based on the service request. Correspondingly, the NRF receives the first request from the SMF.

The first request may include the data plane function requirement and/or the computing plane function requirement in the service request.

S404: The NRF determines P candidate service plane execution function network elements based on the first request.

The P candidate service plane execution function network elements are some or all of N service plane execution function network elements that register capability information with the NRF, and M≤P≤N.

S405: The NRF sends, to the SMF, a first response in response to the first request. Correspondingly, the SMF receives the first response.

The first response indicates the P candidate service plane execution function network elements. For example, the first response may include identifiers of the P candidate service plane execution function network elements. For example, the P candidate service plane execution function network elements may be the RAN #1, the RAN #2, the UPF #1, and the NWDAF.

S406: The SMF determines, based on the first response, M target service plane execution function network elements, a forwarding path between the M target service plane execution function network elements, and a processing rule of each target service plane execution function network element.

For example, the SMF may determine the M target service plane execution function network elements based on a topology relationship between the P candidate service plane execution function network elements, load information of the P candidate service plane execution function network elements, and/or the like. The M target service plane execution function network elements are M candidate service plane execution function network elements in the P candidate service plane execution function network elements. Further, the SMF may further determine the forwarding path between the M target service plane execution function network elements and the processing rule of each target service plane execution function network element.

It should be understood that if P=M, the P candidate service plane execution function network elements are the M target service plane execution function network elements.

For example, the service request is to collect, anonymize, and compress specific data. The SMF may determine that the RAN #1 and the RAN #2 perform compression, the UPF #1 performs collection, and the NWDAF performs anonymization. The SMF determines to establish a connection between the RAN #1 and the UPF #1, a connection between the RAN #2 and the UPF #1, and a connection between the UPF #1 and the NWDAF. A processing rule of the RAN #1 is compression, a processing rule of the RAN #2 is also compression, a processing rule of the UPF #1 is collection and transmission to the NWDAF, and a processing rule of the NWDAF is anonymization.

S407: The SMF establishes the forwarding path between the M target service plane execution function network elements.

For example, the SMF establishes the connection between the RAN #1 and the UPF #1, the connection between the RAN #2 and the UPF #1, and the connection between the UPF #1 and the NWDAF.

S408: The SMF sends the corresponding processing rule to each target service plane execution function network element. Correspondingly, each target service plane execution function network element receives the processing rule from the SMF.

For example, the SMF sends a processing rule #1 to the RAN #1, where the processing rule #1 is compression, sends a processing rule #2 to the RAN #2, where the processing rule #2 is also compression, sends a processing rule #3 to the UPF #1, where the processing rule #3 is collection and transmission to the NWDAF, and sends a processing rule #4 to the NWDAF, where the processing rule #4 is anonymization. Correspondingly, after receiving services, the RAN #1 and the RAN #2 separately compress the services, and then the RAN #1 and the RAN #2 each transmit the compressed services to the UPF #1. The UPF#1 collects the received services, and transmits the services to the NWDAF. The NWDAF anonymizes the received services.

According to the service implementation method provided in this application, a data plane and a computing plane are introduced. The service plane execution function network elements for executing the service, the forwarding path between the service plane execution function network elements for executing the service, and processing rules respectively corresponding to the service plane execution function network elements for executing the service may be determined based on the service request including the data plane function requirement and/or the computing plane function requirement and the capability information of the service plane execution function network elements, so that the service having the data plane function requirement and/or the computing plane function requirement can be implemented.

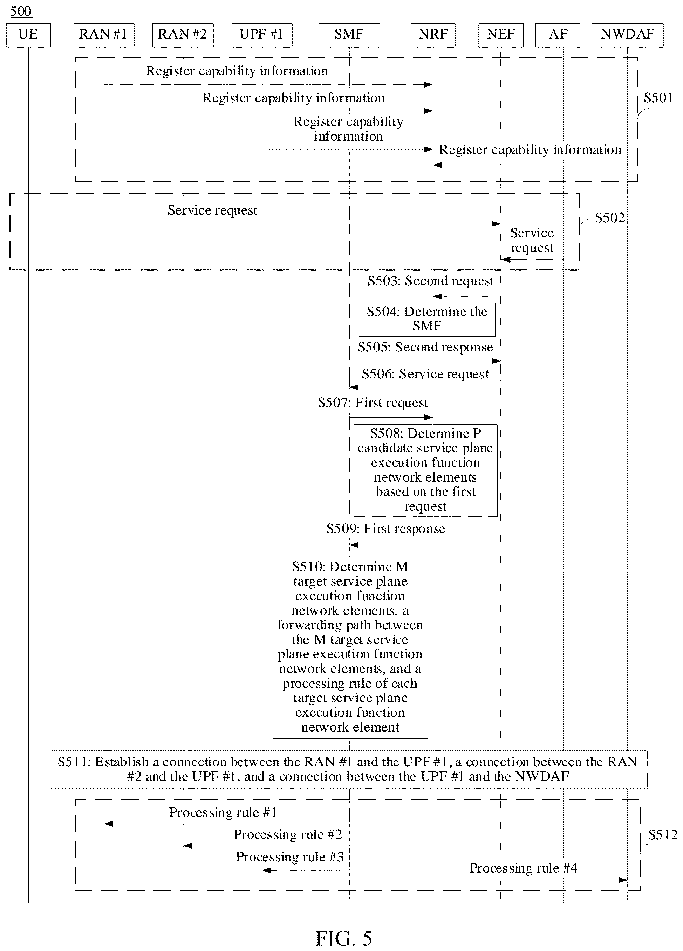

FIG. 5 is a schematic flowchart of a service implementation method according to this application. In the method 500, the SMF may indirectly receive a service request. In addition, service plane execution function network elements register capability information of the service plane execution function network elements with the NRF. The method 500 may include S501 to S512. The following describes the steps.

S501: The service plane execution function network elements register the capability information of the service plane execution function network elements with the NRF.

The step is the same as S401. Refer to S401.

S502: A first network element sends the service request to the NEF. Correspondingly, the NEF receives the service request.

For example, when having a data plane function requirement and/or a computing plane function requirement, the UE or the AF sends the service request to the NEF. The service request may include the data plane function requirement and/or the computing plane function requirement.

S503: The NEF sends a second request to the NRF. Correspondingly, the NRF receives the second request.

The second request may include the data plane function requirement and/or the computing plane function requirement in the service request.

S504: The NRF determines the SMF based on the second request.

Considering that the SMF may have a specific service range, the SMF may register, with the NRF, the service range of the SMF and/or a data plane capability and/or a computing plane capability supported by the SMF. The data plane capability and/or computing plane capability supported by the SMF may be identified by using a data plane capability and/or a computing plane capability supported by a service plane execution function network element of the SMF.

After receiving the second request, the NRF may determine the appropriate SMF based on the data plane function requirement and/or the computing plane function requirement and/or information registered by the SMF with the NRF.

S505: The NRF sends, to the NEF, a second response in response to the second request. Correspondingly, an MEF receives the second response.

The second response may include information about the SMF determined by the NRF, for example, an identifier of the SMF.

S506: The NEF sends the service request to the SMF.

S507 to S512 are the same as S403 to S408.

To be specific, the SMF requests, based on the service request, the NRF to determine candidate service plane execution function network elements. After determining the candidate service plane execution function network elements, the NRF returns the candidate service plane execution function network element to the SMF. The SMF further determines M target service plane execution function network elements, a forwarding path between the M target service plane execution function network elements, and a processing rule of each target service plane execution function network element. In addition, the SMF the forwarding path between the M target service plane execution function network elements, and sends the corresponding processing rule to each target service plane execution function network element.

According to the service implementation method provided in this application, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement and the capability information of the service plane execution function network elements, so that the service having the data plane function requirement and/or the computing plane function requirement can be implemented.

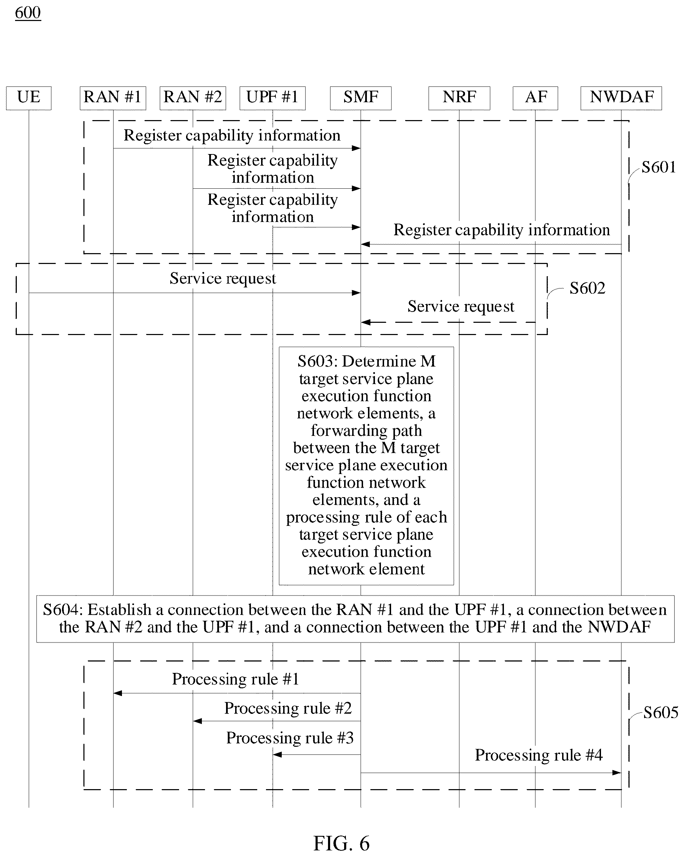

FIG. 6 is a schematic flowchart of a service implementation method according to this application. In the method 600, the SMF may directly receive a service request. In addition, service plane execution function network elements register capability information of the service plane execution function network elements with the SMF. The method 600 may include S601 to S605. The following describes the steps.

S601: The service plane execution function network elements register the capability information of the service plane execution function network elements with the SMF.

For example, a plurality of network elements such as a RAN #1, a RAN #2, a UPF #1, and the NWDAF register capability information of the plurality of network elements with the NRF.

It should be understood that S601 may be alternatively replaced with configuring the capability information of the service plane execution function network elements on the SMF.

S602: A first network element sends the service request to the SMF. Correspondingly, the SMF receives the service request.

For example, when having a data plane function requirement and/or a computing plane function requirement, the UE or the AF sends the service request to the SMF. The service request may include the data plane function requirement and/or the computing plane function requirement.

S603: The SMF determines, based on the service request and capability information of N service plane execution function network elements, M target service plane execution function network elements, a forwarding path between the M target service plane execution function network elements, and a processing rule of each target service plane execution function network element.

It should be understood that the N service plane execution function network elements are the service plane execution function network elements that register the capability information in S601.

For example, the service request is to collect, anonymize, and compress specific data. The SMF may determine, based on the service request and the capability information of the N service plane execution function network elements, that the RAN #1 and the RAN #2 perform compression, and the UPF #1 performs collection, and the NWDAF performs anonymization. The SMF determines to establish a connection between the RAN #1 and the UPF #1, a connection between the RAN #2 and the UPF #1, and a connection between the UPF #1 and the NWDAF. A processing rule of the RAN #1 is compression, a processing rule of the RAN #2 is also compression, a processing rule of the UPF #1 is collection and transmission to the NWDAF, and a processing rule of the NWDAF is anonymization.

S604: The SMF establishes the forwarding path between the M target service plane execution function network elements.

S605: The SMF the processing rule to each target service plane execution function network element.

For example, the SMF establishes the connection between the RAN #1 and the UPF #1, the connection between the RAN #2 and the UPF #1, and the connection between the UPF #1 and the NWDAF. In addition, the SMF sends a processing rule #1 to the RAN #1, where the processing rule #1 is compression, sends a processing rule #2 to the RAN #2, where the processing rule #2 is also compression, sends a processing rule #3 to the UPF #1, where the processing rule #3 is collection and transmission to the NWDAF, and sends a processing rule #4 to the NWDAF, where the processing rule #4 is anonymization. Correspondingly, after receiving services, the RAN #1 and the RAN #2 separately compress the services, and then the RAN #1 and the RAN #2 each transmit the services to the UPF #1. The UPF#1 collects the received services, and transmits the services to the NWDAF. The NWDAF anonymizes the received services.

According to the service implementation method provided in this application, a data plane and a computing plane are introduced. The service plane execution function network elements for executing the service, the forwarding path between the service plane execution function network elements for executing the service, and processing rules respectively corresponding to the service plane execution function network elements for executing the service may be determined based on the service request including the data plane function requirement and/or the computing plane function requirement and the capability information of the service plane execution function network elements, so that the service having the data plane function requirement and/or the computing plane function requirement can be implemented.

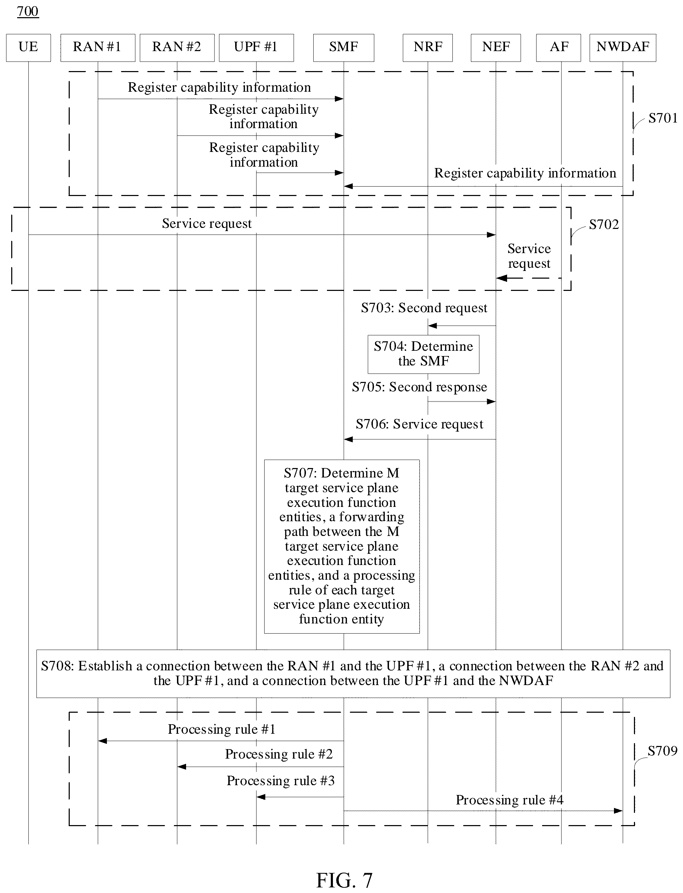

FIG. 7 is a schematic flowchart of a service implementation method according to this application. In the method 700, the SMF may indirectly receive a service request. In addition, service plane execution function network elements register capability information of the service plane execution function network elements with the SMF. The method 700 may include S701 to S709. The following describes the steps.

S701: The service plane execution function network elements register the capability information of the service plane execution function network elements with the SMF.

The step is the same as S601. Refer to S601.

S702: A first network element sends the service request to an NEF. Correspondingly, the NEF receives the service request.

For example, when having a data plane function requirement and/or a computing plane function requirement, the UE or the AF sends the service request to the NEF. The service request may include the data plane function requirement and/or the computing plane function requirement.

S703: The NEF sends a second request to the NRF. Correspondingly, the NRF receives the second request.

The second request may include the data plane function requirement and/or the computing plane function requirement in the service request.

S704: The NRF determines the SMF based on the second request.

S705: The NRF sends, to the NEF, a second response in response to the second request. Correspondingly, an MEF receives the second response.

The second response may include information about the SMF determined by the NRF, for example, an identifier of the SMF.

It should be understood that S703 to S705 are the same as S503 to S505. For details, refer to S503 to S505.

S706: The NEF sends the service request to the SMF.

S707 to S709 are the same as S603 to S605.

To be specific, the SMF determines, based on the service request and capability information of N service plane execution function network elements, M target service plane execution function network elements, a forwarding path between the M target service plane execution function network elements, and a processing rule of each target service plane execution function network element. Further, the SMF establishes the forwarding path between the M target service plane execution function network elements, and sends the processing rule to each target service plane execution function network element.

According to the service implementation method provided in this application, a data plane and a computing plane are introduced. The service plane execution function network elements for executing a service, the forwarding path between the service plane execution function network elements for executing the service, and processing rules respectively corresponding to the service plane execution function network elements for executing the service may be determined based on the service request including the data plane function requirement and/or the computing plane function requirement and the capability information of the service plane execution function network elements, so that the service having the data plane function requirement and/or the computing plane function requirement can be implemented.

It should be noted that, in the method 400 and the method 500 described above, the candidate service plane execution function network elements are determined by the NRF, and the forwarding path between the M target service plane execution function network elements, the forwarding path between the M target service plane execution function network elements, and the processing rule of each target service plane execution function network element are determined by the SMF. However, in some embodiments, the forwarding path between the M target service plane execution function network elements, the forwarding path between the M target service plane execution function network elements, and the processing rule of each target service plane execution function network element may alternatively be determined by the NRF. Then, the NRF may return the foregoing information to the SMF.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the method embodiments. For brevity, details are not described herein.

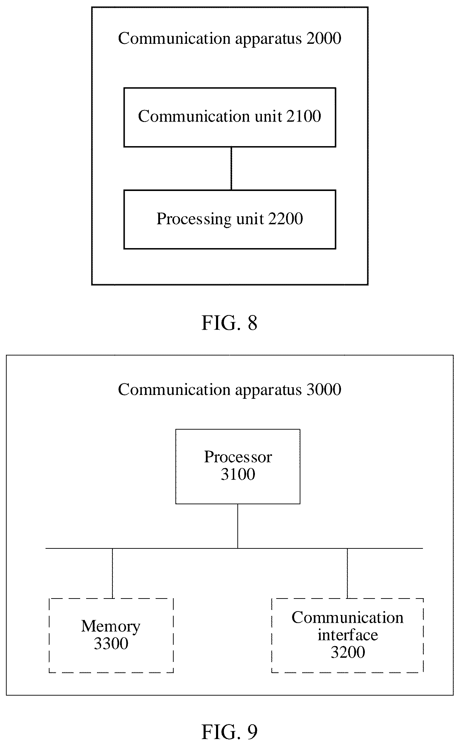

FIG. 8 is a block diagram of a communication apparatus according to an embodiment of this application. As shown in FIG. 8, the communication apparatus 2000 may include a communication unit 2100 and a processing unit 2200. The communication unit 2100 may implement a corresponding communication function. The communication may be internal communication of the communication apparatus 2000 or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a possible design, the communication apparatus 2000 may be the service plane control function network element in the foregoing method embodiment, for example, an SMF, or may be a module or a chip applied to the service plane control function network element. The communication apparatus 2000 may be configured to perform steps or procedures performed by the service plane control function network element in the foregoing method embodiments.

Specifically, the communication unit 2100 is configured to receive a service request, where the service request includes a data plane function requirement and/or a computing plane function requirement. The processing unit 2200 is configured to determine, based on the service request, M target service plane execution function network elements, a forwarding path between the M target service plane execution function network elements, and a processing rule of each target service plane execution function network element, where 2≤M. The processing unit 2200 is further configured to establish the forwarding path between the M target service plane execution function network elements. The communication unit 2100 is further configured to send the processing rule to each target service plane execution function network element, where the processing rule indicates a service operation to be performed by the target service plane execution function network element.

Optionally, the processing unit 2200 is specifically configured to determine the M target service plane execution function network elements based on the service request and capability information of each of N service plane execution function network elements, where the capability information includes a data plane capability and/or a computing plane capability supported by the service plane execution function network element, and the M target service plane execution function network elements belong to the N service plane execution function network elements.

Optionally, the M target service plane execution function network elements include one or more of the following: at least one access network device, at least one user plane function network element, or at least one network data analytics function network element.

Optionally, the M target service plane execution function network elements include a first access network device in the at least one access network device. The communication unit 2100 is specifically configured to send the processing rule to the first access network device through an interface between the communication apparatus and the first access network device.

Optionally, the communication unit 2100 is specifically configured to receive the service request from a first network element; or receive the service request from the first network element via a network exposure function network element. The first network element is one of the following: a terminal device, an application function network element, a task anchor, or an operation, administration, and maintenance function network element.

Optionally, the communication unit 2100 is further configured to send a first request to a network repository function network element based on the service request, where the first request includes the data plane function requirement and/or the computing plane function requirement, the first request is used by the network repository function network element to determine P candidate service plane execution function network elements, and the M target service plane execution function network elements belong to the P candidate service plane execution function network elements; and receive a first response from the network repository function network element, where the first response indicates the P candidate service plane execution function network elements. The processing unit 2200 is specifically configured to determine the M target service plane execution function network elements from the P candidate service plane execution function network elements.

Optionally, the communication unit 2100 is further configured to receive registration information from some or all of the N service plane execution function network elements, where the registration information includes the capability information of the service plane execution function network element.

Optionally, the communication unit 2100 is further configured to receive configuration information, where the configuration information includes capability information of some or all of the N service plane execution function network elements.

For details about steps or procedures performed by units in the communication apparatus 2000, refer to the foregoing method embodiments. Details are not described herein again.

It should be understood that the communication apparatus 2000 may be further configured to perform steps or procedures performed by any other network element (for example, a service plane execution function network element) in the foregoing method embodiments. For details, refer to the foregoing method embodiments. Details are not described herein again.

It should be understood that, the "unit" in the communication apparatus 2000 may be implemented by hardware, may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another appropriate component that supports the described function. For another example, the communication unit 2100 may be replaced with a transceiver or a transceiver circuit (which, for example, may include a receiver circuit and a transmitter circuit), and the processing unit 2200 may be replaced with a processor or a processing circuit.

FIG. 9 is a block diagram of another communication apparatus 3000 according to an embodiment of this application. The apparatus 3000 may be a service plane control function network element, or may be a chip, a chip system, a processor, or the like that supports the service plane control function network element in implementing the foregoing method. The apparatus may be configured to implement the methods described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, so that the apparatus 3000 performs the methods described in the foregoing method embodiments.

In another optional design, the apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300. The memory 3300 may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be separately arranged, or may be integrated together.

It should be understood that the apparatus 3000 may alternatively be any other network element (for example, a service plane execution function network element) in the foregoing method embodiments, or may be a chip, a chip system, a processor, or the like that supports implementation of the foregoing method. The apparatus may be configured to implement the methods described in the foregoing method embodiments. For details, refer to the descriptions in the foregoing method embodiments.

It should be understood that, in a possible design, steps in the method embodiments provided in this application may be completed by using a hardware integrated logic circuit in a processor or by using instructions in the form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the hardware decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform steps or procedures performed by any network element in any one of the foregoing method embodiments.

This application further provides a computer-readable storage medium. The computer-readable storage medium stores program code. When the program code is run on a computer, the computer is enabled to perform steps or procedures performed by any network element in any one of the foregoing method embodiments.

This application further provides a communication apparatus, including a processor and an interface. The interface is configured to send and/or receive a signal, so that the processor performs steps or procedures performed by any network element in any one of the foregoing method embodiments.

This application further provides a communication system, including at least one of a service plane execution function network element and a service plane control function network element.

The foregoing apparatus embodiments completely correspond to the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement same or similar functions in an existing or future protocol.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for convenient and brief description, for a specific operating process of the foregoing systems, apparatuses, and units, refer to a corresponding process in the foregoing method embodiments. Details are not described herein again.

In the several embodiments provided in this application, it should be understood that the disclosed system, apparatus, and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement embodiments, all or a part of embodiments may be implemented in the form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service implementation method, applied to a service plane control function network element, wherein the method comprises:
receiving a service request, wherein the service request comprises a data plane function requirement and/or a computing plane function requirement;
determining, based on the service request, M target service plane execution function network elements, a forwarding path between the M target service plane execution function network elements, and a processing rule of each target service plane execution function network element, wherein 2≤M; and
establishing the forwarding path between the M target service plane execution function network elements, and sending the processing rule to each target service plane execution function network element, wherein the processing rule indicates a service operation to be performed by the target service plane execution function network element.

2. The method according to claim 1, wherein determining the M target service plane execution function network elements based on the service request comprises:
determining the M target service plane execution function network elements based on the service request and capability information of each of N service plane execution function network elements, wherein the capability information comprises a data plane capability and/or a computing plane capability supported by the service plane execution function network element, and the M target service plane execution function network elements belong to the N service plane execution function network elements.

3. The method according to claim 1 or 2, wherein the M target service plane execution function network elements comprise one or more of the following: at least one access network device, at least one user plane function network element, or at least one network data analytics function network element.

4. The method according to claim 3, wherein the M target service plane execution function network elements comprise a first access network device in the at least one access network device; and
sending the processing rule to each target service plane execution function network element comprises:
sending the processing rule to the first access network device through an interface between the service plane control function network element and the first access network device.

5. The method according to any one of claims 1 to 4, wherein receiving the service request comprises:
receiving the service request from a first network element; or
receiving the service request from the first network element via a network exposure function network element, wherein
the first network element is one of the following: a terminal device, an application function network element, a task anchor, or an operation, administration, and maintenance function network element.

6. The method according to any one of claims 1 to 5, wherein determining the M target service plane execution function network elements based on the service request comprises:
sending a first request to a network repository function network element based on the service request, wherein the first request comprises the data plane function requirement and/or the computing plane function requirement, the first request is used by the network repository function network element to determine P candidate service plane execution function network elements, and the M target service plane execution function network elements belong to the P candidate service plane execution function network elements;
receiving a first response from the network repository function network element, wherein the first response indicates the P candidate service plane execution function network elements; and
determining the M target service plane execution function network elements from the P candidate service plane execution function network elements.

7. The method according to claim 2, wherein before determining, based on the service request, the M target service plane execution function network elements, the forwarding path between the M target service plane execution function network elements, and the processing rule of each target network element, the method further comprises:
receiving registration information from some or all of the N service plane execution function network elements, wherein the registration information comprises the capability information of the service plane execution function network element.

8. The method according to claim 2, wherein before determining, based on the service request, the M target service plane execution function network elements, the forwarding path between the M target service plane execution function network elements, and the processing rule of each target network element, the method further comprises:
receiving configuration information, wherein the configuration information comprises capability information of some or all of the N service plane execution function network elements.

9. A communication system, comprising:
a service plane control function network element and M target service plane execution function network elements, wherein
the service plane control function network element is configured to:
receive a service request, wherein the service request comprises a data plane function requirement and/or a computing plane function requirement;
determine, based on the service request, the M target service plane execution function network elements, a forwarding path between the M target service plane execution function network elements, and a processing rule of each target service plane execution function network element, wherein 2≤M≤N; and
establish the forwarding path between the M target service plane execution function network elements, and send the processing rule to each target service plane execution function network element, wherein the processing rule indicates a service operation to be performed by the target service plane execution function network element; and
the target service plane execution function network element is configured to:
receive the processing rule from the service plane control function network element.

10. The communication system according to claim 9, wherein the target service plane execution function network element is further configured to:
send registration information to a network repository function network element or the service plane control function network element, wherein the registration information comprises a data plane capability and/or a computing plane capability supported by the target service plane execution function network element.

11. The communication system according to claim 9 or 10, wherein the target service plane execution function network element is a network device, and the target service plane execution function network element is specifically configured to:
receive the processing rule through an interface between the network device and the service plane control function network element.

12. A communication apparatus, comprising:
a communication unit, configured to receive a service request, wherein the service request comprises a data plane function requirement and/or a computing plane function requirement; and
a processing unit, configured to determine, based on the service request, M target service plane execution function network elements, a forwarding path between the M target service plane execution function network elements, and a processing rule of each target service plane execution function network element, wherein 2≤M, wherein
the processing unit is further configured to establish the forwarding path between the M target service plane execution function network elements; and
the communication unit is further configured to send the processing rule to each target service plane execution function network element, wherein the processing rule indicates a service operation to be performed by the target service plane execution function network element.

13. The communication apparatus according to claim 12, wherein the processing unit is specifically configured to:
determine the M target service plane execution function network elements based on the service request and capability information of each of N service plane execution function network elements, wherein the capability information comprises a data plane capability and/or a computing plane capability supported by the service plane execution function network element, and the M target service plane execution function network elements belong to the N service plane execution function network elements.

14. The communication apparatus according to claim 12 or 13, wherein the M target service plane execution function network elements comprise one or more of the following: at least one access network device, at least one user plane function network element, or at least one network data analytics function network element.

15. The communication apparatus according to claim 14, wherein the M target service plane execution function network elements comprise a first access network device in the at least one access network device, wherein
the communication unit is specifically configured to:
send the processing rule to the first access network device through an interface between the communication apparatus and the first access network device.

16. The communication apparatus according to any one of claims 12 to 15, wherein the communication unit is specifically configured to:
receive the service request from a first network element; or
receive the service request from the first network element via a network exposure function network element, wherein
the first network element is one of the following: a terminal device, an application function network element, a task anchor, or an operation, administration, and maintenance function network element.

17. The communication apparatus according to any one of claims 12 to 16, wherein the communication unit is further configured to:
send a first request to a network repository function network element based on the service request, wherein the first request comprises the data plane function requirement and/or the computing plane function requirement, the first request is used by the network repository function network element to determine P candidate service plane execution function network elements, and the M target service plane execution function network elements belong to the P candidate service plane execution function network elements;
receive a first response from the network repository function network element, wherein the first response indicates the P candidate service plane execution function network elements; and
the processing unit is specifically configured to:
determine the M target service plane execution function network elements from the P candidate service plane execution function network elements.

18. The communication apparatus according to claim 13, wherein the communication unit is further configured to:
receive registration information from some or all of the N service plane execution function network elements, wherein the registration information comprises the capability information of the service plane execution function network element.

19. The communication apparatus according to claim 13, wherein the communication unit is further configured to:
receive configuration information, wherein the configuration information comprises capability information of some or all of the N service plane execution function network elements.

20. A communication apparatus, comprising a processor, wherein the processor is coupled to a memory, the memory is configured to store a program or instructions, and when the program or the instructions are executed by the processor, the apparatus is caused to perform the method according to any one of claims 1 to 8.

21. A communication apparatus, comprising a processor and an interface, wherein the interface is configured to send and/or receive a signal, to cause the processor to perform the method according to any one of claims 1 to 8.

22. A readable storage medium, wherein the readable storage medium stores a computer program or instructions; and when the computer program or the instructions are executed, the computer is caused to perform the method according to any one of claims 1 to 8.

23. A computer program product, comprising computer program instructions, wherein the computer program instructions cause the computer to perform the method according to any one of claims 1 to 8.
